Europäisches Patentamt

European Patent Office

Office européen des brevets

(11) Publication number: **0 230 326**
**A2**

# EUROPEAN PATENT APPLICATION

(21) Application number: **87100976.7**

(22) Date of filing: **22.01.87**

(51) Int. Cl.⁴: **A 61 C 1/14**

(30) Priority: **24.01.86 JP 12096/86**

(43) Date of publication of application: **29.07.87**
**Bulletin 87/31**

(84) Designated Contracting States: **AT DE FR GB**

(71) Applicant: **NAKANISHI DENTAL MFG. CO. LTD.,**
**340 Kamihinata, Kanuma City Tochigi (JP)**

(72) Inventor: **Nakanishi, Takasuke, 340 Kamihinata,**
**Kanuma-shi, Tochigi-ken (JP)**

(74) Representative: **Dipl.-Ing. H. Hauck Dipl.-Phys. W.**
**Schmitz Dipl.-Ing. E. Graalfs Dipl.-Ing. W. Wehnert**
**Dr.-Ing. W. Döring, Mozartstrasse 23,**
**D-8000 München 2 (DE)**

(54) Chucking device for dental handpiece.

(57) A chucking device for a dental handpiece (10) is provided for chucking a dental treatment chip (11) such as a dental bur. The chucking device includes a sleeve (14) for receiving the dental bur (11), a push-button (21) for acting on the dental bur (11) and a locking element (19) adapted to lock the dental bur (11) within the sleeve (14). The locking element (19) is formed as a spring plate received within a longitudinal slot (14b) in the sleeve (14) and has a projecting part (19a) adapted to be engaged with a mating recessed part (11b) in the dental bur (11) for securing the dental bur (11) in the sleeve (14) to perform dental treatment operation. For exchanging the dental bur (11), the push-button (21) is simply pressed so that an abutment portion (21a) of the push-button (21) acts on the projecting part (19a) of the spring plate (19) to disengage the projecting part (19a) from the recessed part (11b) of the dental bur (11) to disconnect the bur (11) from the sleeve (14).

TITLE OF THE INVENTION:

Chucking Device for Dental Handpiece

BACKGROUND OF THE INVENTION:

Field of the Invention;

This invention relates to a chucking device for a dental handpiece and more particularly to a chucking device for a dental handpiece according to which the dental treatment chip such as a dental bur can be disconnected by simply pressing a push-button to exchange with a new one.

Related Art Statement;

A variety of chucking devices for a dental handpiece have so far been presented in the art. For example, West German Patent No. 3048061 discloses such a chucking device in which a peripheral groove is formed in the vicinity of the leading end part of a dental bur adapted for dental treatment operation and a head housing sleeve provided with a mating engaging part engagable with the peripheral groove is fitted in the head housing of the dental handpiece, with the head housing sleeve being turned about the longitudinal axis of the handpiece as center for engaging or disengaging the peripheral groove and the engaging part relative to each other to mount or dismount the dental bur.

However, the dental bur can not be exchanged promptly with this type of the chucking device since the head housing sleeve need be rotated for exchanging the

1

dental bur.

## OBJECTS AND SUMMARY OF THE INVENTION:

It is a principal object of the present invention to provide a chucking device for a dental handpiece in which a dental treatment chip can be promptly dismounted by one-touch operation of pressing a push-button.

It is another object of the present invention to provide a chucking device for a dental handpiece in which a dental treatment chip can be positively secured by simply pushing it.

It is a further object of the present invention to provide a chucking device for a dental handpiece capable of performing reliable mounting and dismounting of a dental treatment chip and presenting simplified but durable structure against the force applied to the dental treatment chip.

According to the present invention, there is provided a chucking device for a dental handpiece comprising:

a detal treatment chip for performing dental treatment operation;

a sleeve for receiving therein the dental treatment chip;

a push-button operable for disconnecting the dental treatment chip; and

locking means having a locking part for locking the

2

dental treatment chip within the sleeve so as not to be detached from the sleeve, the locking means being adapted to disconnect the chip when the chip is exchanged;

the locking part engaging with an engaging part formed with the dental treatment chip to lock and secure the dental treatment chip within the sleeve when the dental handpiece is used, the push-button being pressed upon exchanging the chip to bring an abutment portion of the push-button into abutment with the locking means to thereby disengage the engaging part of the dental treatment chip and the locking part of the locking means from each other to thus disconnect the dental treatment chip from the sleeve.

BRIEF DESCRIPTION OF THE DRAWINGS:

Fig.1 is an exploded perspective view schematically showing the foremost part of the dental handpiece according to the present invention;

Fig.2 is a partial longitudinal section taken along line II - II of Fig.1;

Fig.3 is a partial exploded perspective view showing essential portions of the chucking device of the present invention; and

Fig.4 is a partial longitudinal section similar to Fig.2 in which the dental treatment chip is being detached.

PREFERRED EMBODIMENT OF THE INVENTION:

A preferred embodiment of the present invention will be hereafter explained by referring to the accompanying

3

drawings.

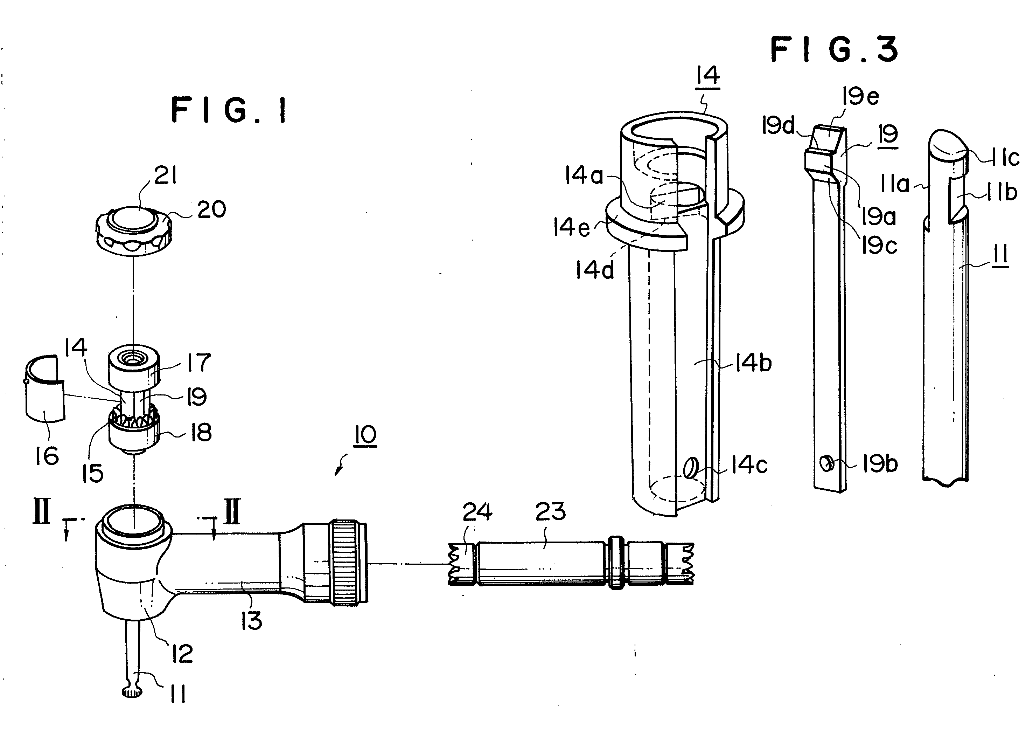

In Fig.1, a foremost part of a dental handpiece of the present invention is indicated by the reference numeral 10. The foremost part 10 is made up of a head housing 12 for attachment of a dental treatment tool or chip, such as a dental bur 11, and a head housing jacket 13. There are provided, within the head housing 12, a bur sleeve 14 for receiving and securing the dental bur 11, a head gear 15 for rotating the bur sleeve and secured to the bur sleeve 14, and an upper ball bearing 17 and a lower ball bearing 18 with a spacer 16 interposed therebetween. A spring plate 19 adapted for attachment and removal of the dental bur 11 is fitted to the bur sleeve 14, as later described. A head cap 20 is threadedly mounted to the upper end of the head housing 12. To this head cap 20 is mounted a push-button 21 adapted for one-touch dismounting of the dental bur 11.

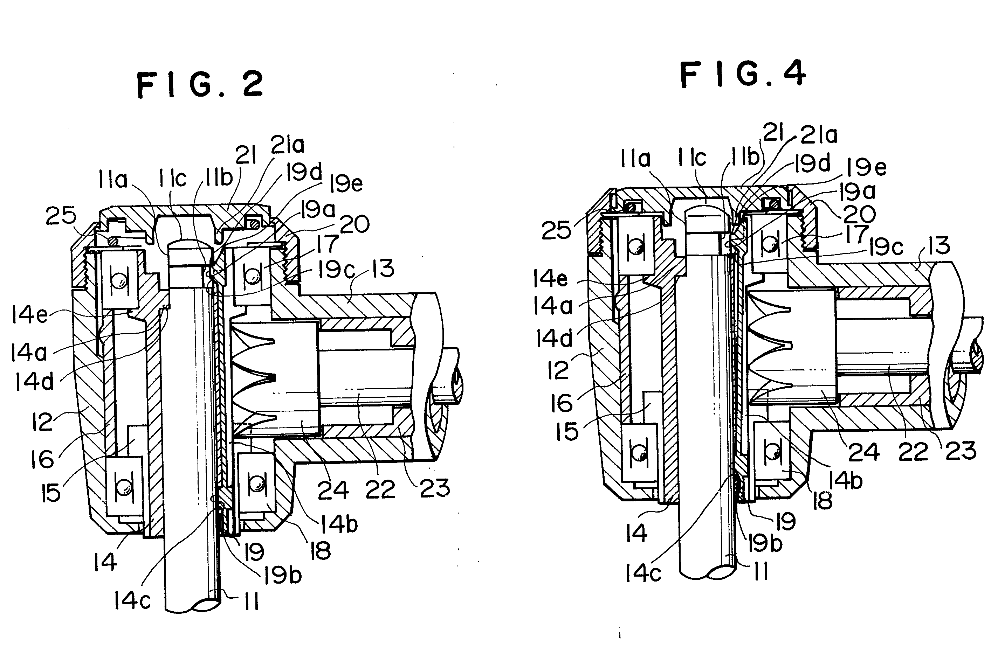

Within the head housing jacket 13, there are mounted a shaft sleeve 23 fitted with a rotary shaft 22 (See Fig.2) and connected to and driven by a driving motor, not shown, and a main gear 24 secured to the rotary shaft 22 and engaged with the head gear 15 for rotating the head gear.

Fig.2 shows the head housing 12 in partial longitudinal section and Fig.3 shows the bur sleeve 14, the spring plate 19 and the dental bur 11 in perspective. In the state shown in Fig.2, the dental bur 11 is fitted and secured within the bur sleeve 14. The dental bur 11 has a

4

recessed abutment section 11a adapted to be engaged by a mating projecting abutment section 14a of the bur sleeve 14 to secure the dental bur 11 so as not to be rotated within the bur sleeve 14. The dental bur 11 also has a recessed engaging part 11b adapted to be engaged by a projecting locking part 19a of the spring plate 19 to secure and lock the bur 11 so as not to be disengaged from the bur sleeve 14 (See Fig.2). The bur sleeve 14 has a longitudinl slot 14b and a through-hole 14c such that the spring plate 19 can be secured within the slot 14b by having the spring plate 19 inserted into the slot 14b and having a pin 19b introduced into the through-hole 14c. The recessed abutment section 11a and the recessed engaging part 11b of the dental bur 11 are diametrally opposite to each other and the projecting abutment section 14a and the longitudinal slot 14b are similarly diametrally opposite to each other, such that, when the dental bur 11 is introduced into the bur sleeve 14 and turned until the recessed abutment section 11a and the projecting abutment section 14a mate with each other, the projecting locking part 19a of the spring plate 19 is brought to a position engaging with the recessed engaging part 11b of the dental bur 11. When attaching the dental bur 11 into the bur sleeve 14, the bur 11 is pushed into the inside of the bur sleeve 14. In such manner, a head 11c of the dental bur 11 abuts on a lower inclined cam surface 19c of the spring plate 19 to thrust the locking part 19a

5

sidewards. As the dental bur 11 is pushed further into the sleeve 14, the locking part 19a is reverted and engaged into the recessed engaging part 11b under the snap action of the spring plate as shown in Fig.2 so that the dental bur 11 is engaged with a shoulder 19d of the projecting locking part 19a so as to be locked against incidental dropping. During this time, the bur 11 is turned slightly manually in either directions in order to find such attachment position. As shown in Fig.2, the dental bur 11 abuts in such attachment position with a lower surface 14d of the projecting abutment section 14a of the bur sleeve 14. In such manner, there is provided a structure sufficiently resistant to the force acting on the dental bur 11.

As shown in Figs. 1 and 2, the upper ball bearing 17 is mounted above the lower ball bearing 18 with the spacer 16 interposed therebetween. The upper ball bearing 17 also rests on a flange 14e of the bur sleeve 14 (See Fig.2). In operation, a driving motor, not shown, is energized for rotating the main gear 24 and the head gear 15 meshing therewith such that the bur sleeve 14 and the dental bur 11 attached to the bur sleeve 14 are rotated in unison for performing the required dental treatment operation.

As shown in Fig.2, the push-button 21 is usually kept by a spring 25 in the raised position. When it is desired to disconnect the dental bur 11, it only suffices to press the push-button 21. In such manner, an abutment portion 21a of the push-button 21 abuts on an upper inclined cam surface 19e of the spring plate 19 to thrust the projecting locking part 19a of the spring plate 19 sidewards as shown in Fig.4 to release the engagement between the dental bur 11 and the projecting locking part 19a, so that the dental bur 11 is disconnected from the bur sleeve 14. The bur used can be exchanged when so desired by a new bur 11 which can be attached easily to the bur sleeve 14 by pushing it into the sleeve in the manner as described above.

From the foregoing it is seen that with a chucking device of the present invention the dental treatment chip can be disconnected and exchanged by one-touch operation of pressing the push-button, while the dental treatment chip can be attached in position by simply inserting the chip into the inside of the bur sleeve, so that the exchange operation can be achieved easily and promptly.

0230326

<u>WHAT IS CLAIMED IS:</u>

A chucking device for a dental handpiece (10) comprising:

a detal treatment chip (11) for performing dental treatment operation;

a sleeve (14) for receiving therein said dental treatment chip (11);

a push-button (21) operable for disconnecting said dental treatment chip (11); and

locking means (19) having a locking part (19a) for locking said dental treatment chip (11) within said sleeve (14) so as not to be detached from the sleeve (14), said locking means (19) being adapted to disconnect the chip (11) when the chip (11) is exchanged;

said locking part (19a) engaging with an engaging part (11b) formed with said dental treatment chip (11) to lock and secure the dental treatment chip (11) within said sleeve (14) when the dental handpiece (10) is used, said push-button (21) being pressed upon exchanging the chip (11) to bring an abutment portion (21a) of the push-button (21) into abutment with said locking means (19) to thereby disengage the engaging part (11b) of the dental treatment chip (11) and the locking part (19a) of the locking means (19) from each other to disconnect said dental treatment chip (11) from said sleeve (14).

2. A chucking device for a dental handpiece (10) as

8

claimed in claim 1, wherein said locking means (19) has a first cam surface (19e), said abutment portion (21a) of said push-button (21) abutting on said first cam surface (19e) to shift said locking means (19) so as to disengage said engaging part (11b) of said dental treatment chip (11) and the locking part (19a) of said locking means (19) from each other.

3. A chucking device for a dental handpiece (10) as claimed in claim 1, wherein said locking means (19) has a second cam surface (19c), a leading end part (11c) of the dental treatment chip (11) abutting on said second cam surface (19c) to shift said locking means (19) when the chip (11) is pushed and fitted into said sleeve (14), said locking part (19a) snapping into the engaging part (11b) of the dental treatment chip (11) to lock and secure said chip (11) within said sleeve (14) when said leading end part (11c) is introduced further beyond the locking part (19a) of said locking means (19).

4. A chucking device for a dental handpiece (10) as claimed in claim 1, wherein said locking means (19) is engaged in a slot (14b) formed in said sleeve (14).

5. A chucking device for a dental handpiece (10) as claimed in claim 1, wherein said locking means (19) comprises a spring plate, an end part (19b) of which is secured to said sleeve (14), said spring plate being pivoted about said end part (19b) when mounting or dismounting said dental treatment chip (11).

6. A chucking device for a dental handpiece (10) as claimed in claim 1, wherein said dental treatment chip (11) has a recessed abutment section (11a) adapted to be brought into abutment with a projecting abutment section (14a) formed with said sleeve (14) for securing said dental treatment chip (11) against rotation within said sleeve (14) and for sustaining a force acting on the dental treatment chip (11).

7. A chucking device for a dental handpiece (10) as claimed in claim 6, wherein said locking part (19a) of said locking means (19) and said engaging part (11b) of said dental treatment chip (11) are formed at a relative position in which the locking part (19a) and said engaging part (11b) are engageable with each other when said recessed abutment section (11a) abuts on said projecting abutment section (14a).

FIG. 1

FIG. 3

21
20
17
14
19
18
16
15
10
II
II
13
12
11

14
14a
14e
14d
14b
14c

19e
19d
19
19a
19c
19b

11c
11a
11b
11

24
23

1/2

0230326

0230326

FIG. 4

FIG. 2